(19) Europäisches Patentamt
European Patent Office
Office européen des brevets

(11) EP 1 702 304 B1

(12) **FASCICULE DE BREVET EUROPEEN**

(45) Date de publication et mention de la délivrance du brevet:
**29.02.2012 Bulletin 2012/09**

(21) Numéro de dépôt: **04817612.7**

(22) Date de dépôt: **29.12.2004**

(51) Int Cl.:
***G06T 3/40*** *(2006.01)*

(86) Numéro de dépôt international:
**PCT/FR2004/003401**

(87) Numéro de publication internationale:
**WO 2005/073912 (11.08.2005 Gazette 2005/32)**

(54) **PROCEDE ET SYSTEME DE SUPER-RESOLUTION D'IMAGES CONFOCALES ACQUISES A TRAVERS UN GUIDE D'IMAGE, ET DISPOSITIF UTILISE POUR LA MISE EN OEUVRE D'UN TEL PROCEDE**

VERFAHREN UND SYSTEM FÜR SUPERAUFLÖSUNG VON DURCH EINE BILDFÜHRUNG BESCHAFFTEN KONFOKALEN BILDERN UND ZUR IMPLEMENTIERUNG EINES SOLCHEN VERFAHRENS VERWENDETE EINRICHTUNG

METHOD AND SYSTEM FOR SUPER-RESOLUTION OF CONFOCAL IMAGES ACQUIRED THROUGH AN IMAGE GUIDE, AND DEVICE USED FOR IMPLEMENTING SUCH A METHOD

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **31.12.2003 FR 0315628**

(43) Date de publication de la demande:
**20.09.2006 Bulletin 2006/38**

(73) Titulaire: **Mauna Kea Technologies**
**75010 Paris (FR)**

(72) Inventeurs:
- **BERIER, Frédéric**
**F-29810 Plouarzel (FR)**
- **PERCHANT, Aymeric**
**F-75013 Paris (FR)**

(74) Mandataire: **Pontet, Bernard et al**
**Pontet Allano & Associés s.e.l.a.r.l.**
**25, Rue Jean Rostand**
**Parc Club Orsay Université**
**91893 Orsay Cedex (FR)**

(56) Documents cités:
**EP-A- 0 731 600** **EP-A- 1 001 374**
**US-A- 4 618 884** **US-B1- 6 466 618**

- **LEE S ET AL: "SCATTERED DATA INTERPOLATION WITH MULTILEVEL B-SPLINES" IEEE TRANSACTIONS ON VISUALIZATION AND COMPUTER GRAPHICS, IEEE SERVICE CENTER, PISCATAWAY, NJ, US, vol. 3, no. 3, 1 juillet 1997 (1997-07-01), pages 228-244, XP000702051 ISSN: 1077-2626**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un procédé et système de super-résolution d'images confocales acquises à travers un guide d'image, ainsi qu'un dispositif utilisé pour la mise en oeuvre d'un tel procédé.

Elle trouve une application particulièrement intéressante dans le domaine de l'imagerie médicale. Toutefois l'invention est d'un cadre plus large puisqu'elle peut s'appliquer à tout domaine dans lequel on réalise de l'imagerie au moyen d'un guide composé d'une pluralité de fibres optiques, tel que par exemple dans le domaine d'observation de l'intérieur d'un dispositif manufacturé.

Le guide d'image permet d'obtenir une image. Un tel dispositif permet de déporter le balayage laser, la source lumineuse et le récepteur loin de l'objet à observer. Par exemple dans un système à balayage laser avec obtention d'une image confocale, le guide d'image est un assemblage de plusieurs milliers de fibres optiques dont l'arrangement spatial est identique en entrée et en sortie.

L'extrémité distale, c'est à dire proche de l'objet à observer donc loin de la source lumineuse, est associée à une tête constituée d'optiques afin de focaliser le faisceau laser dans l'objet à observer. Un tel guide d'image permet d'observer l'objet en profondeur, avec une résolution latérale et un champ d'observation qui dépendent du grandissement des optiques, de la distance inter-coeur du guide d'image et du diamètre du guide. En modifiant le grandissement, on peut faire varier la résolution, au détriment du champ. De la même façon, un guide d'image similaire, mais avec une distance inter-coeur plus petite permet d'obtenir les même résultats. Dans les deux cas, lorsque la résolution est plus petite, le champ imagé diminue également.

Un guide d'image est une structure fixe dont le rapport entre la surface utile et le nombre de coeurs présents définit la résolution du système. Pour un même champ imagé, et donc une même surface de guide d'image, la distance inter-coeur entre fibres ne peut pas être réduite à cause de contraintes physiques et technologiques. D'abord des contraintes de fabrication rentrent en jeux. Puis des contraintes physiques liées à la diaphonie du guide, et aux propriétés optiques des fibres permettant de guider la lumière autour des longueurs d'ondes visibles.

Ainsi les limites physiques de guidage par paquet de fibres optiques ne permettent pas d'obtenir une meilleure résolution à grandissement et à champ fixe.

Dans de nombreuses applications de l'imagerie confocale fibrée, la recherche d'une meilleure résolution est primordiale. Dans une application médicale par exemple, la vision d'une cellule ou de composants de la cellule requiert une résolution qui peut aller au delà des limites physiques de cette technologie.

Il existe de nombreux travaux de super-résolution réalisés à partir d'une caméra classique, où le schéma d'échantillonnage est régulier et disposé suivant une grille carrée ou rectangulaire. Ces travaux utilisent massivement la régularité spatiale de l'échantillonnage. On connaît notamment des travaux sur la super-résolution où l'échantillonnage issu d'un ensemble d'acquisitions est un échantillonnage entrelacé. On peut par exemple citer les publications suivantes :

H. Shekarforoush and R. Chellappa. "Data-driven multi-channel super-resolution with application to video sequences". Journal of the Optical Society of America A, 16(3):481--492, Mar. 1999.;

R Komprobst, R. Peeters, T Vieville, G. Malandain, S. Mierisova, S. Sunaert, and 0. Faugerasand R Van Hecke; "Superresolution in mri and its influence in statistical analysis"; Technical Report nO 4513, INRIA, July 2002; et

S. Lertrattanapanich and N. K. Bose; "High resolution image formation from low resolution frames using delaunay triangulation" ; IEEE Transactions on Image Processing, vol. 11 (nO 12), December 2002.

On connaît enfin des travaux décrivant un système où le mouvement entre plusieurs vues est assez libre et produit un échantillonnage véritablement irrégulier. La fonction de transfert du système décrit est spatialement variante, et le rapport entre la largeur de la fonction de transfert et la distance séparant les points d'échantillonnage n'est pas constant sur l'acquisition, ce qui a pour conséquence la prise en compte des optiques du système, donc une résolution assez complexe. Un tel système est notamment divulgué dans les documents suivants :

A. Patti, M. Sezan, and M. Tekalp; "Superresolution video reconstruction with arbitrary sampling lattices and nonzero aperture time"; IEEE Trans. on Image Processing, pages 1064-1078, August 1997; et

Andrew J. Patti and Yucel Altunbasak; "Artifact reduction for set theoretic super resolution image reconstruction with edge adaptive constraints and higher-order interpolants"; IEEE Transactions on Image Processing, 10(l) :179-186, January 2001.

On connaît le document US 6466 618 décrivant un système pour obtenir une image haute résolution à partir de plusieurs images faible résolution. Chaque image faible résolution est acquise par insertion d'un filtre chromatique sur un capteur CCD. Chaque filtre comporte un maillage différent du maillage du capteur CCD. Le système décrit dans ce document utilise des petits mouvements des objets visualisés.

On connaît également le document US 4,618,884 décrivant un dispositif d'acquisition d'image au moyen d'un guide d'image. Différentes images sont acquises en décalant une plaquette à l'extrémité distale du guide d'image qui reste fixe.

La présente invention a pour but d'augmenter la résolution d'une image acquise à travers un guide d'image. Un autre but remarquable de l'invention est d'appliquer le concept de super-résolution à un guide d'image.

L'invention a encore pour but d'améliorer la résolution d'une image à champ constant acquise à travers un guide d'image en augmentant le nombre de points de mesure par unité de surface.

On atteint au moins l'un des objectifs précités avec un procédé pour augmenter la résolution d'images confocales acquises à travers un guide d'image constitués d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation. Selon l'invention, pour une position donnée de la tête optique, ce procédé comprend les étapes de :

- réalisation d'une pluralité d'acquisitions à travers le guide d'image, chaque acquisition étant réalisée pour un décalage spatial donné de ladite extrémité distale du guide d'image par rapport à la tête optique,
- transformation des données de chaque acquisition en un nuage de points pondéré par la puissance optique mesurée sur l'objet à travers chaque fibre optique du guide d'image,
- recalage de chaque nuage de points par rapport à un nuage de points pris comme référence,
- superposition des nuages de points ainsi recalés, et
- reconstruction d'une image finale à partir de cette superposition.

Avec le procédé selon l'invention, on réalise une acquisition redondante d'un même objet avant une étape de reconstruction de l'image finale. Pour une position donnée de la tête optique, on réalise plusieurs acquisitions, chaque acquisition correspondant à une position donnée du guide d'image.

Pour toute la suite de la description, l'étape de recalage de nuage de points est un abus de langage pour signifier qu'en fait on traite chaque nuage de points de façon à recaler les images correspondant à ces nuages de points, sans forcément reconstruire ces images.

En particulier, une seule acquisition à travers le guide d'image est équivalente à une acquisition sur une grille irrégulière (qui est l'emplacement des fibres), appelé dans la suite échantillonnage de l'objet. Le déplacement du guide d'image dans le tube revient à déplacer le schéma d'échantillonnage qui est l'arrangement des fibres individuelles dans le guide d'image. Avec deux acquisitions, on obtient ainsi deux échantillonnages du même objet, mais décalés spatialement. En les superposant, on obtient un échantillonnage avec deux fois plus de points de mesure. En multipliant l'expérience, on obtient un nuage de points d'échantillonnage plus important. L'échantillonnage résultant est irrégulier et doit être reconstruit sous forme d'une image.

L'étape de la transformation des données acquises peut être suivie de l'application d'un filtre pour éliminer des artefacts dus à la présence du guide d'image. Ce filtre peut consister en un procédé de traitement d'image acquise au moyen d'un guide constitué par une pluralité de fibres optiques. Plus précisément, pour chaque fibre optique, on isole sur l'image acquise (les données brutes) une zone correspondant à cette fibre optique, puis on utilise les informations de cette zone pour estimer la puissance transmise par cette fibre, et la puissance provenant de l'objet observé via cette même fibre. Une représentation de l'objet observé est alors un nuage de points pondéré que l'on peut reconstruire sous forme d'une image par interpolation dudit nuage de points pondéré sur une grille carrée. Une telle transformation (estimation de la puissance + interpolation) permet d'éliminer le motif dû aux fibres optiques.

Selon un mode de mise en oeuvre de l'invention, l'étape de recalage comporte les étapes suivantes :

- correction des distorsions géométriques,
- reconstruction d'une image de référence désignée par image fixe par interpolation d'un nuage de points de référence dit nuage de points fixe,
- pour chaque autre nuage de points, désigné par nuage de points mobile, reconstruction d'une image dite mobile, puis optimisation d'une erreur quadratique moyenne calculée entre ladite image mobile et ladite image fixe.

Avantageusement, on calcule l'erreur quadratique moyenne en ne considérant que les pixels correspondant aux points desdits nuages de points mobiles.

L'algorithme d'interpolation est par exemple une suite d'approximations B-splines itérative notamment divulgué dans le document suivant : Seungyong Lee, George Wolberg, and Sung Yong Shin; "Scattered data interpolation with multilevel b-splines" ; IEEE transactions on visualization and computer graphics, 3(3), July-September 1997.

Avantageusement, le nuage de points de référence peut correspondre à une position du guide d'image au repos.

Selon l'invention, l'étape de recalage peut par exemple consister à recaler chaque nuage de points en fonction de distances de décalages prédéterminées obtenues par une étape d'étalonnage des déplacements du guide d'image.

De préférence, à chaque acquisition, pour décaler le guide d'image par rapport à la tête optique, on applique au moins une tension sur au moins une bande piézoélectrique, qui est au moins solidaire de l'extrémité distale de ce guide d'image. A titre d'exemple, on utilise quatre bandes constituant un tube piézoélectrique qui entoure au moins l'extrémité distale du guide d'image, et on applique, pour chaque déplacement de l'extrémité distale du guide d'image,

une paire de tensions opposées sur respectivement deux bandes opposées. Par ailleurs, le décalage spatial est obtenu par un mouvement sensiblement de translation latérale de l'extrémité distale du guide d'image selon deux directions orthogonales ou au moins non colinéaires.

Avantageusement, on peut réaliser l'étape d'étalonnage en appliquant les étapes suivantes sur un nombre limité de nuages de points obtenus par acquisition d'une mire de référence disposée à la place dudit objet d'observation :

- correction des distorsions géométriques,
- reconstruction d'une image de référence, désignée par image fixe, par interpolation d'un nuage de points de référence dit nuage de points fixe,
- pour chaque autre nuage de points, désigné par nuage de points mobile, reconstruction d'une image dite mobile, puis optimisation d'une erreur quadratique moyenne calculée entre ladite image mobile et ladite image fixe,
- élaboration d'un modèle linéaire décrivant la distance de décalage obtenue entre image fixe et image mobile en fonction de la tension appliquée sur la bande piézoélectrique pour réaliser ce décalage.

L'étalonnage permet de valider un modèle de déplacements linéaires en fonction de la tension appliquée et d'estimer un coefficient de décalage en fonction des mesures. Les nuages de points ultérieurs sont alors recalés en utilisant ce modèle linéaire.

Par ailleurs, on peut réaliser l'étape de reconstruction de l'image finale au moyen d'un algorithme dit d'approximation B-splines itérative pour lequel la superposition est considérée comme un nuage de points irréguliers. Cet algorithme possède un bon comportement mathématique, une bonne stabilité, et un coût raisonnable en temps de calcul.

Le problème de la reconstruction à partir de plusieurs acquisitions est le même que celui de la reconstruction ne connaissant qu'une seule acquisition avec un système non linéaire. On suppose ici que la fonction de transfert équivalente du système est spatialement variante, et que l'échantillonnage est irrégulier.

L'étape de reconstruction de l'image finale peut être suivie d'une étape de déconvolution de l'image finale si l'échantillonnage ainsi synthétisé est redondant.

Suivant un autre aspect de l'invention, il est proposé un dispositif pour augmenter la résolution d'images confocales acquises à travers un guide d'image constitués d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation. Selon l'invention, la tête optique comporte des moyens optiques solidaires de cette tête optique. Le dispositif comprend en outre un tube piézoélectrique entourant le guide d'image et solidaire de ce guide d'image, au moins à ladite extrémité distale, de façon à spatialement décaler cette extrémité distale par rapport à la tête optique en réponse à une consigne de décalage. Cette consigne est de préférence une paire de tensions appliquées au tube piézoélectrique.

Le tube piézoélectrique est avantageusement constitué d'au moins quatre bandes céramiques indépendantes occupant chacune un quart du tube. Les faces interne et externe de chaque bande peuvent être recouvertes de matériau métallique, tel que l'argent, de sorte que l'application de tensions opposées sur deux bandes opposées respectivement, décale l'extrémité distale du tube en utilisant l'effet piézoélectrique transversal. Plus précisément, les bandes céramiques peuvent être commandées deux par deux dans deux directions orthogonales.

Il est également proposé un système, pour augmenter la résolution d'images confocales acquises à travers un guide d'image constitués d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation. Selon l'invention, pour une position donnée de la tête optique, ce système comprend :

- des moyens pour réaliser une pluralité d'acquisitions à travers le guide d'image,
- des moyens pour spatialement décaler, à chaque acquisition, ladite extrémité distale du guide d'image par rapport à la tête optique,
- des moyens pour transformer des données de chaque acquisition en un nuage de points pondéré par la puissance optique mesurée sur l'objet à travers chaque fibre optique du guide d'image,
- des moyens pour recaler chaque nuage de points,
- des moyens pour superposer les nuages de points ainsi recalés, et
- de moyens pour reconstruire une image finale à partir de cette superposition.

La présente invention sera mieux comprise et d'autres avantages apparaîtront à la lumière de la description qui va suivre d'un exemple de réalisation, description faite en référence aux dessins sur lesquels :

- La figure 1 est une vue schématique éclaté du système global selon l'invention ;
- La figure 2 est une vue schématique du tube piézoélectrique entourant le guide d'image ;
- La figure 3 est une vue schématique illustrant le déplacement de l'extrémité du guide d'image ;
- La figure 4 est une vue schématique illustrant une superposition irrégulière de nuages de points ; et
- La figure 5 est un schéma blocs illustrant le principe de recalage des nuages de points.

Sur la figure 1 on voit un faisceau ordonné de fibres optiques souples (notamment plusieurs dizaines de milliers) formant un guide d'image 1 avec, sur son extrémité proximale, une source lumineuse 2 et un système d'injection de fibres permettant d'illuminer les fibres une à une et, sur son extrémité distale, une tête optique 3 permettant de focaliser le faisceau sortant de la fibre illuminée en un point situé à une profondeur donnée de l'objet observé 4. Le système d'injection comprend plusieurs éléments optiques 5 précédés d'un système de balayage de fibres 6, tel qu'un déviateur, permettant de balayer les fibres une à une à très grande vitesse. Chaque fibre est utilisée tour à tour pour véhiculer le faisceau d'illumination et également le faisceau de retour correspondant provenant de l'objet observé. La résolution spatiale est obtenue par focalisation du faisceau laser en un point et par le caractère confocal résidant dans le filtrage spatial de l'objet observé par les mêmes fibres que celles ayant servi à l'illumination. Cela permet de réceptionner, au moyen d'un photodétecteur 9, exclusivement le signal provenant de l'objet observé et de réaliser une image point par point.

L'extrémité distale du guide d'image est insérée dans un tube piézoélectrique 7, lui-même monté dans un tube rigide 3 formant tête optique et contenant des optiques 8 placées en sortie du guide d'image 1. Le tube piézoélectrique 7 permet de déplacer le guide d'image 1 à l'intérieur de la tête optique 3 qui reste fixe par rapport à l'objet observé. On évite ainsi les problèmes dus au frottement de la tête optique sur l'objet observé.

Sur la figure 2 on voit en perspective la configuration du tube piézoélectrique 7. Ce tube 7 est constitué de quatre céramiques occupant chacune un quart de cylindre. Le tube 7 est recouvert d'argent sur les faces interne et externe afin d'utiliser l'effet piézoélectrique transversal. Ce phénomène explique la déformation d'un cristal lorsque celui-ci est plongé dans un champ électrique, il résulte de l'existence de dipôles électriques dans la configuration cristalline.

Lorsqu'on applique une tension entre la face interne et externe d'une céramique, celle-ci s'allonge (ou se rétrécit selon le signe de la tension) et devient plus fine (respectivement plus large). Le balayage se fait donc en appliquant une tension positive sur une des céramiques et la tension opposée sur la céramique opposée. Comme une face s'allonge et la face opposée se raccourcit, le tube 7 se courbe et son extrémité libre se déplace. Il est ainsi possible de décaler l'extrémité distale des fibres selon deux axes orthogonaux et ce dans les deux sens. La figure 3 illustre un déplacement du tube piézoélectrique 7 selon un axe. Les traits pleins représentent la position de repos, sans décalage. Les traits en pointillés représentent l'extrémité du tube piézoélectrique 7 décalé vers le haut, entraînant ainsi le décalage de l'extrémité distale du guide d'image 1. Par contre les optiques 8a et 8b, solidaires de la tête optique, ainsi que l'objet observé 4 restent fixes. Le déplacement de l'extrémité distale du guide d'image correspond à un déplacement du point d'impact du faisceau laser sur l'objet observé.

Pour chaque paire de tensions appliquées sur le tube piézoélectrique 7, une déformation est réalisée, et l'acquisition effectuée au travers du guide d'image 1 est ainsi décalée d'une distance proportionnelle aux tensions appliquées.

Le procédé de super-résolution selon l'invention comporte une première étape dans laquelle pour une position fixe donnée de la tête optique, on réalise une série d'acquisitions. Pour chaque acquisition, le faisceau laser balaye l'ensemble des fibres optiques. Le photodétecteur 9 récupère alors un ensemble de données brutes que l'on peut représenter en les arrangeant sur une grille suivant l'ordre du balayage laser. On voit apparaître pour chaque fibre des dômes représentatifs de la position des fibres dans le guide par rapport au balayage laser. Le décalage de l'extrémité distale du guide d'image 1 ne change pas l'arrangement ou la position des fibres optiques à l'extrémité proximale du guide d'image. Par contre l'objet observé à travers ces dômes assimilables à une grille avec des trous s'est déplacé lorsque le tube piézoélectrique 7 s'est déformé.

Ensuite ces données brutes sont transformées en nuage de points pondéré par la puissance optique mesurée sur l'objet, à travers chaque fibre du guide d'image. Cette transformation permet à ce que chaque point représente l'information effectivement vue par chaque fibre au cours du balayage laser. On peut également appliquer un filtre à chaque nuage de points de façon à éliminer des artefacts (grille) liés à la présence du guide d'image.

En réalisant plusieurs acquisitions avec des positions différentes de l'extrémité distale du guide d'image, c'est comme si on avait créé des points d'échantillonnage décalés par exemple verticalement et horizontalement. Le nombre d'acquisitions et les directions ne sont limités que par la précision du tube piézoélectrique 7.

Sur la figure 4, on voit pour chaque fibre, une zone d'influence que l'on peut définir comme la largeur de la fonction de transfert optique de chaque fibre combinée avec celle des optiques placés entre la sortie du guide d'image et l'objet observé. On remarque que la fonction de transfert d'une fibre n'est pas forcément égale à celle de la fibre voisine. En pratique on peut les considérer comme étant toutes différentes, au moins dans leur largeur.

Avant de pouvoir superposer les nuages de points, il faut les recaler. En effet, on a acquis le même objet, mais le schéma d'échantillonnage est décalé. Après correction des distorsions géométriques du système, le décalage se

réduit à une translation qui est évaluée en comparant toutes les acquisitions d'un même objet à une acquisition de référence, en générale celle où le tube piézoélectrique 7 est au repos (par convention).

Le problème de recalage des images est un sujet assez classique et de nombreuses techniques existent. Le problème consiste à recaler deux images d'un même objet prises avant et après décalage grâce au mécanisme piézoélectrique. Dans le cas présent, le modèle de transformation sous-jacent est un modèle de translation. Le nombre de paramètres à estimer n'est donc que de deux (x, y). Cependant, le modèle de transformation du cas présent diffère de beaucoup d'études car on utilise une grille irrégulière.

Dans le cas présent, on cherche la meilleure transformation en minimisant une fonction de coût à deux paramètres (les valeurs de la translation suivant les axes de translation). On peut par exemple considérer que les problèmes aux bords sont négligeables car les déplacements sont petits. La solution recherchée est alors proche de (0,0).

Le principe de l'algorithme retenu est illustré sur la figure 5. D'une façon générale, on va définir un nuage de points de référence, ci-après désigné par nuage de points fixe. On va ensuite interpoler ce nuage de points fixe de façon à reconstruire une image ci-après désignée par image fixe 10.

En particulier, l'interpolation du nuage de points fixe pour obtenir l'image fixe est réalisée en utilisant l'algorithme d'approximation b-spline itérative divulgué dans le document de Seungyong Lee et al., et que l'on décrit brièvement un peu plus loin. Afin de ne pas calculer à chaque fois la valeur de l'interpolation, on réalise une interpolation sur une grille régulière fine, de préférence carrée, puis on choisit le plus proche voisin. On obtient ainsi une interpolation assez lisse et très rapide à calculer.

On réalise ensuite une interpolation de chaque autre nuage de points, ci-après désigné par nuage de points mobile, de façon à reconstruire une image mobile. Puis on optimise l'erreur quadratique moyenne entre chaque image mobile et l'image fixe. Avantageusement, on ne réalise pas, comme c'est classiquement le cas, un calcul pixel par pixel entre deux images, mais on réalise un calcul en ne prenant en compte que les pixels correspondant aux points du nuage de points mobile. L'avantage en est un gain de temps considérable.

L'optimisation est réalisé avec une boucle dont les étapes sont :

Une étape de transformation 14 dans laquelle on définit des paramètres de translation qui vont être évalués dans la boucle ;

Une étrape d'interpolation 12 de la transformation, dans laquelle on translate le nuage de points mobile initial par la transformation en cours ;

Une étape de calcul de distance 13, dans laquelle on mesure une distance entre l'image mobile issue du nuage de points mobile 11 translaté et l'image fixe 10 représentant le nuage de points fixe. Cette distance est une erreur quadratique moyenne évaluée entre les points du nuage de points mobile et l'image fixe interpolée ;

Une étape d'optimisation dans laquelle on utilise un optimiseur 15 à base de gradient, comme un gradient conjugué. L'optimiseur 15 évalue les variations locales de la distance précédemment calculée afin de trouver une nouvelle transformation (i.e. translation) qui permette de diminuer la valeur de la distance (c'est-à-dire l'optimiser) à la prochaine boucle.

On sort de la boucle lorsque la fonction distance ne décroît plus.

Afin d'éviter de réaliser le processus de recalage qui vient d'être décrit pour tous les nuages de points, on va effectuer ce processus de recalage pour un objet de référence avec un nombre limité d'acquisitions. Pour ce faire, on remplace l'objet observé par l'objet de référence tel une mire d'étalonnage ou plus précisément une mire de résolution par exemple. Les résultats obtenus lors de ce recalage d'un nombre limité de nuages de points permettent ensuite d'étalonner les décalages du tube piézoélectrique en fonction des tensions appliquées. L'ensemble guide d'image 1 et tête optique 3 peut tourner par rapport à l'axe du balayage de la partie confocale 5, 6, il faut donc au moins estimer l'axe des déplacements ainsi que leur sens. Pour cela, on réalise un nombre limité de décalages possibles, par exemple 64, et on les recale par rapport à une référence commune, par exemple un nuage de points obtenu lorsque le tube piézoélectrique est au repos. Puis on effectue une régression linéaire sur l'ensemble des couples tension appliquée au piézoélectrique - décalage mesuré par recalage. Si ce modèle est linéaire et a une précision satisfaisante (très inférieure à la distance inter-coeur), on considère que le modèle est valable, et on peut l'utiliser directement par la suite sur les acquisitions ultérieures réalisées sur l'objet de mesure, sans avoir à recaler de nouveaux les images représentées par les nuages de points. Ce mode de réalisation préférentiel permet donc un traitement beaucoup plus rapide puisque les nuages de points acquises avec l'objet observé ne subissent pas tout le processus de recalage avec interpolation. Ce processus n'est réalisé que pour 64 nuages points acquis avec une mire de résolution ou autre.

On peut aussi envisager, dans un mode non préférentiel, d'utiliser directement l'objet observé plutôt qu'une mire de résolution pour élaborer le modèle linéaire à partir d'un nombre limité de nuages de points.

Dans le cas où le modèle n'est pas linéaire, ou s'il est imprécis, ou s'il y a de l'hystérésis, on ne peut pas l'utiliser. Il convient donc dans ce cas de mettre en oeuvre le mode dégradé décrit précédemment, c'est à dire interpoler puis recaler chaque nuage de points qui doit faire l'objet de super-résolution.

Lorsque tous les décalages sont connus, on fait subir à chaque échantillonnage le décalage correspondant, et on les superpose. On obtient ainsi une acquisition synthétique avec autant de points en plus que d'acquisitions. La reconstruction s'effectue alors en deux temps. Tout d'abord, on approxime, ou on interpole, le nuage de points pondéré résultant avec des méthodes classiques. On prend bien en compte le fait que ce nuage résultant est irrégulier. On utilise par exemple l'approximation itérative de bsplines telle que définie précédemment lors du recalage. Cet algorithme peut être brièvement décrit ci-après :

Soit f la fonction à reconstruire. On va exprimer f sous forme d'une fonction B-spline bicubique uniforme définie sur un maillage rectangulaire $\Phi$ couvrant le support de f. La fonction obtenue est donc $C^2$. On note $\Phi_{i,j}$ les valeurs associées aux noeuds du maillage. Sans perte de généralité, on suppose que ce maillage est composé des points de coordonnées entières sur un rectangle du plan.

Connaissant les valeurs des points de contrôle $\Phi_{i,j}$, f est donnée par :

$$f(x,y)=\sum_{k=0}^{3}\sum_{l=0}^{3}[\Phi_{|x|-1+k,|y|-1+l}B_k(x-|x|)B_l(y-|y|)] \quad (1)$$

La B-spline est donnée par:

$$B_0(t)=\frac{1}{6}(1-t)^3$$

$$B_1(t)=\frac{1}{6}(3t^3-6t^2+4)$$

$$B_2(t)=\frac{1}{6}(-3t^3+3t^2+3t+1)$$

$$B_3(t)=\frac{1}{6}t^3$$

L'estimation des points de contrôles $\Phi_{i,j}$ s'effectue par approximations itératives, en utilisant des treillis hiérarchiques. On passe d'une échelle à l'échelle suivante en raffinant le treillis d'un facteur 2. Chaque point de l'échantillonnage va influencer 16 points de contrôle. Sans inverser l'ensemble du système, on va à chaque échelle calculer les contributions des échelles précédentes localement, et déduire les résidus à estimer pour cette échelle. Chaque point de l'échantillonnage va influencer les 16 points de contrôle les plus proches.

Cet algorithme permet d'obtenir une interpolation à la convergence de l'algorithme (nombre fini d'itérations). Dans le cas présent, on peut considérer deux cas limites pour la taille du treillis. Le premier est le cas où il n'existe pas un seul point de contrôle $\Phi_{i,j}$ qui ne soit influencé par au moins un point de l'échantillonnage. Le second est le cas où deux points quelconques de l'échantillonnage ne peuvent influencer un même point de contrôle. Ces deux cas permettent de calculer la taille du treillis de départ, et la taille du treillis permettant d'atteindre la convergence. Ces tailles peuvent être calculées empiriquement en supposant que la répartition des points est celle d'un échantillonnage hexagonal. On observe l'histogramme des distances entres les points d'échantillonnage voisins (au sens de leur diagramme de Voronoï), et on garde le quantile à 5% (ou tout autre faible pourcentage). Cette distance minimale est en fait la distance entre deux décalages.

D'autres algorithmes permettent de reconstruire un nuage de points avec des résultats satisfaisants. L'originalité réside dans la formalisation du problème sous forme d'interpolation ou d'approximation d'un nuage de points irréguliers.

Selon l'invention, on réalise éventuellement ensuite une étape de déconvolution du signal en faisant l'approximation que le système est linéaire invariant, et en prenant une fonction de transfert moyen d'une fibre du guide d'image. Un filtrage de Wiener par exemple peut être utilisé.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour augmenter la résolution d'images confocales acquises à travers un guide d'image constitué d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation, **caractérisé en ce que**, pour une position donnée de la tête optique, ce procédé comprend les étapes de :

    - réalisation d'une pluralité d'acquisitions à travers le guide d'image, chaque acquisition étant réalisée pour un décalage spatial donné de ladite extrémité distale du guide d'image par rapport à la tête optique,
    - transformation des données de chaque acquisition en un nuage de points pondéré par la puissance optique mesurée sur l'objet à travers chaque fibre optique du guide d'image,
    - recalage de chaque nuage de points par rapport à un nuage de points pris comme référence,
    - superposition des nuages de points ainsi recalés, et
    - reconstruction d'une image finale à partir de cette superposition.

2. Procédé selon la revendication 1, **caractérisé en ce que** l'étape de la transformation des données acquises est suivie de l'application d'un filtre pour éliminer des artefacts dus à la présence du guide d'image.

3. Procédé selon la revendication 1 ou 2, **caractérisé en ce que** l'étape de recalage comporte les étapes suivantes :

    - correction des distorsions géométriques,
    - reconstruction d'une image de référence désignée par image fixe, par interpolation d'un nuage de points de référence dit nuage de points fixe,
    - pour chaque autre nuage de points, désigné par nuage de points mobile, reconstruction d'une image dite mobile, puis optimisation d'une erreur quadratique moyenne calculée entre ladite image mobile et ladite image fixe.

4. Procédé selon la revendication 3, **caractérisé en ce qu'**on calcule l'erreur quadratique moyenne en ne considérant que les pixels correspondant aux points desdits nuages de points mobiles.

5. Procédé selon la revendication 3 ou 4, **caractérisé en ce que** l'interpolation consiste en un algorithme dit d'approximation B-splines itérative.

6. Procédé selon l'une quelconque des revendications 3 à 5, **caractérisé en ce que** le nuage de points fixe correspond à une position du guide d'image au repos.

7. Procédé selon la revendication 1 ou 2, **caractérisé en ce que** l'étape de recalage consiste à recaler les nuages de points en fonction de distances de décalage prédéterminées obtenues par une étape d'étalonnage des déplacements du guide d'image.

8. Procédé selon l'une quelconque des revendications précédentes, **caractérisé en ce qu'**à chaque acquisition, pour décaler le guide d'image par rapport à la tête optique, on applique au moins une tension sur au moins une bande piézoélectrique, qui est au moins solidaire de l'extrémité distale de ce guide d'image.

9. Procédé selon les revendications 7 et 8, **caractérisé en ce qu'**on réalise l'étape d'étalonnage en appliquant les étapes suivantes sur un nombre limité de nuages de points obtenus par acquisition d'une mire de référence disposée à la place dudit objet d'observation :

    - correction des distorsions géométriques,
    - reconstruction d'une image de référence désignée par image fixe par interpolation d'un nuage de points de référence dit nuage de points fixe,
    - pour chaque autre nuage de points, désigné par nuage de points mobile, reconstruction d'une image dite

mobile, puis optimisation d'une erreur quadratique moyenne calculée entre ladite image mobile et ladite image fixe,

- élaboration d'un modèle linéaire décrivant la distance de décalage obtenue entre image fixe et image mobile en fonction de la tension appliquée sur la bande piézoélectrique pour réaliser ce décalage.

**10.** Procédé selon la revendication 8 ou 9, **caractérisé en ce qu'**on utilise quatre bandes constituant un tube piézoélectrique qui entoure au moins l'extrémité distale du guide d'image, et **en ce qu'**on applique, pour chaque déplacement de l'extrémité distale du guide d'image, une paire de tensions opposées sur respectivement deux bandes opposées.

**11.** Procédé selon l'une quelconque des revendications précédentes, **caractérisé en ce que** le décalage spatial est obtenu par un mouvement sensiblement de translation latérale de l'extrémité distale du guide d'image selon deux directions orthogonales.

**12.** Procédé selon l'une quelconque des revendications précédentes, **caractérisé en ce qu'**on réalise l'étape de reconstruction de l'image finale au moyen d'un algorithme dit d'approximation B-splines itérative pour lequel la superposition est considérée comme un nuage de points irréguliers.

**13.** Procédé selon l'une quelconque des revendications précédentes, **caractérisé en ce que** l'étape de reconstruction de l'image finale est suivie d'une étape de déconvolution de l'image finale.

**14.** Dispositif pour augmenter la résolution d'images confocales acquises à travers un guide d'image constitué d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation, **caractérisé en ce que** la tête optique comporte des moyens optiques solidaires de cette tête optique, et **en ce que** le dispositif comprend en outre un tube piézoélectrique entourant le guide d'image et solidaire de ce guide d'image, au moins à ladite extrémité distale, de façon à spatialement décaler cette extrémité distale par rapport à la tête optique en réponse à une consigne de décalage.

**15.** Dispositif selon la revendication 14, **caractérisé en ce que** le tube piézoélectrique est constitué d'au moins quatre bandes céramiques indépendantes occupant chacune un quart du tube.

**16.** Dispositif selon la revendication 15, **caractérisé en ce que** les faces interne et externe de chaque bande sont recouvertes de matériau métallique, tel que l'argent, de sorte que l'application de tensions opposées sur deux bandes opposées respectivement, décale l'extrémité distale du tube en utilisant l'effet piézoélectrique transversal.

**17.** Dispositif selon la revendication 15 ou 16, **caractérisé en ce que** les bandes céramiques sont commandées deux par deux dans deux directions orthogonales.

**18.** Système, mettant en oeuvre le procédé selon l'une quelconque des revendications 1 à 13, pour augmenter la résolution d'images confocales acquises à travers un guide d'image constitué d'une pluralité de fibres optiques, l'extrémité proximale de ce guide d'image étant connectée à un dispositif de balayage laser prévu pour émettre un faisceau laser dans chaque fibre optique du guide d'image et recueillir chaque faisceau de retour lors d'une acquisition, l'extrémité distale étant associée à une tête optique pour focaliser le faisceau laser émis par le guide d'image dans un objet d'observation, **caractérisé en ce que**, pour une position donnée de la tête optique, ce système comprenant :

- des moyens pour réaliser une pluralité d'acquisitions à travers le guide d'image,
- des moyens pour spatialement décaler, à chaque acquisition, ladite extrémité distale du guide d'image par rapport à la tête optique,
- des moyens pour transformer des données de chaque acquisition en un nuage de points pondéré par la puissance optique mesurée sur l'objet à travers chaque fibre optique du guide d'image,
- des moyens pour recaler chaque nuage de points,
- des moyens pour superposer les nuages de points ainsi recalés, et des de moyens pour reconstruire une image finale à partir de cette superposition.

## Claims

**1.** Method for increasing the resolution of confocal images acquired through an image guide constituted by a plurality of optical fibres, the proximal end of this image guide being connected to a laser scanning device provided for emitting a laser beam into each optical fibre of the image guide and collecting each return beam during an acquisition, the distal end being associated with an optical head for focusing the laser beam emitted by the image guide, in an object under observation, **characterized in that**, for a given position of the optical head, this method comprises the steps of:

- carrying out a plurality of acquisitions through the image guide, each acquisition being produced for a given spatial shift of said distal end of the image guide relative to the optical head,
- transforming the data of each acquisition into a point cloud weighted by the optical power measured on the object through each optical fibre of the image guide,
- co-registering each point cloud relative to a point cloud taken as reference,
- superimposing the thus co-registered point clouds, and
- reconstructing a final image from this superimposition.

**2.** Method according to claim 1, **characterized in that** the step of transforming the acquired data is followed by the application of a filter in order to eliminate artefacts due to the presence of the image guide.

**3.** Method according to claim 1 or 2, **characterized in that** the co-registering step comprises the following steps:

- correction of the geometrical distortions,
- reconstruction of a reference image designated "fixed image" by interpolation of a reference point cloud referred to as a "fixed point cloud",
- for every other point cloud, designated "mobile point cloud", reconstruction of an image referred to as "mobile,", then optimization of a mean square error calculated between said mobile image and said fixed image.

**4.** Method according to claim 3, **characterized in that** the mean square error is calculated by considering only the pixels corresponding to the points of said mobile point clouds.

**5.** Method according to claim 3 or 4, **characterized in that** the interpolation consists of a so-called iterative B-splines approximation algorithm.

**6.** Method according to any one of claims 3 to 5, **characterized in that** the fixed point cloud corresponds to a position of the image guide at rest.

**7.** Method according to claim 1 or 2, **characterized in that** the co-registering step consists of co-registering the point clouds as a function of predetermined shift distances obtained by a step of calibrating of the movements of the image guide.

**8.** Method according to any one of the preceding claims, **characterized in that** at each acquisition, in order to shift the image guide relative to the optical head, at least one voltage is applied to at least one piezoelectric strip, which is at least integral with the distal end of this image guide.

**9.** Method according to claims 7 and 8, **characterized in that** the calibration step is carried out by applying the following steps to a limited number of point clouds obtained by acquisition of a reference pattern arranged in the place of said object under observation:

- correction of geometrical distortions,
- reconstruction of a reference image designated "fixed image" by interpolation of a reference point cloud referred to as a "fixed point cloud",
- for every other point cloud, designated "mobile. point cloud", reconstruction of an image referred to as "mobile", then optimization of a mean square error calculated between said mobile image and said fixed image.
- production of a linear model describing the shift distance obtained between fixed image and mobile image as a function of the voltage applied to the piezoelectric strip in order to produce this shift.

**10.** Method according to claim 8 or 9, **characterized in that** four strips are used constituting a piezoelectric tube which

surrounds at least the distal end of the image guide, and **in that**, for each movement of the distal end of the image guide, a pair of opposite voltages is applied to two opposite strips respectively.

**11.** Method according to any one of the preceding claims, **characterized in that** the spatial shift is obtained by a substantially lateral translation movement of the distal end of the image guide in two orthogonal directions.

**12.** Method according to any one of the preceding claims, **characterized in that** the step of reconstructing the final image is carried out by means of a so-called iterative B-splines approximation algorithm for which the superimposition is considered as an irregular-point cloud.

**13.** Method according to any one of the preceding claims, **characterized in that** the step of reconstructing the final image is followed by a step of deconvolution of the final image.

**14.** Device for increasing the resolution of confocal images acquired through an image guide constituted by a plurality of optical fibres, the proximal end of this image guide being connected to a laser scanning device provided for emitting a laser beam into each optical fibre of the image guide and collecting each return beam during an acquisition, the distal end being associated with an optical head for focusing the laser beam emitted by the image guide, in an object under observation, **characterized in that** the optical head comprises optical means integral with this optical head, and **in that** the device also comprises a piezoelectric tube surrounding the image guide and integral with this image guide, at least at said distal end, so as to spatially shift this distal end relative to the optical head in response to a shift order.

**15.** Device according to claim 14, **characterized in that** the piezoelectric tube is constituted by at least four independent ceramic strips each occupying a quarter of the tube.

**16.** Device according to claim 15, **characterized in that** internal and external faces of each strip can be covered with metallic material, such as silver, such that the application of opposite voltages to two opposite strips respectively shifts the distal end of the tube by exploiting the transverse piezoelectric effect.

**17.** Device according to claim 15 or 16, **characterized in that** the ceramic strips are controlled two by two in two orthogonal directions.

**18.** System implementing the method according to any one of claims 1 to 13, for increasing the resolution of confocal images acquired through an image guide constituted by a plurality of optical fibres, the proximal end of this image guide being connected to a laser scanning device provided for emitting a laser beam into each optical fibre of the image guide and collecting each return beam during an acquisition, the distal end being associated with an optical head for focusing the laser beam emitted by the image guide, in an object under observation, **characterized in that**, for a given position of the optical head, this system comprises:

- means for producing a plurality of acquisitions through the image guide,
- means for spatially shifting, at each acquisition, said distal end of the image guide relative to the optical head,
- means for transforming the data of each acquisition into a point cloud weighted by the optical power measured on the object through each optical fibre of the image guide,
- means for co-registering each point cloud,
- means for superimposing the thus-co-registered point clouds, and means for reconstructing a final image from this superimposition.

**Patentansprüche**

**1.** Verfahren zum Erhöhen der Auflösung von konfokalen Bildern, die durch einen Bildleiter erfasst werden, der aus einer Mehrzahl von Lichtleitfasern besteht, wobei das proximale Ende dieses Bildleiters mit einer Laserabtastvorrichtung verbunden ist, die dazu vorgesehen ist, in jede Lichtleitfaser des Bildleiters einen Laserstrahl zu senden und bei einer Erfassung jeden Rückstrahl aufzunehmen, wobei dem distalen Ende ein optischer Kopf zugeordnet ist, um den von dem Bildleiter ausgestrahlten Laserstrahl in ein Beobachtungsobjekt zu fokussieren, **dadurch gekennzeichnet, dass** bei einer gegebenen Stellung des optischen Kopfes dieses Verfahren folgende Schritte umfasst:

- Durchführen von mehreren Erfassungen durch den Bildleiter, wobei jede Erfassung bei einer gegebenen räumlichen Verschiebung des distalen Endes des Bildleiters bezüglich des optischen Kopfes erfolgt,
- Verarbeiten der Daten einer jeden Erfassung zu einer Punktwolke, die durch die am Objekt durch jede Lichtleitfaser des Bildleiters gemessene Lichtleistung gewichtet wird,
- Korrektur jeder Punktwolke bezüglich einer als Referenz verwendeten Punktwolke,
- Überlagerung der so korrigierten Punktwolken, und
- Erzeugung eines endgültigen Bildes ausgehend von dieser Überlagerung.

**2.** Verfahren nach Anspruch 1, **dadurch gekennzeichnet, dass** dem Schritt zur Verarbeitung der erfassten Daten die Anwendung eines Filters zum Beseitigen von Artefakten folgt, die auf den vorhandenen Bildleiter zurückzuführen sind.

**3.** Verfahren nach Anspruch 1 oder 2, **dadurch gekennzeichnet, dass** der Korrekturschritt nachfolgende Schritte umfasst:

- Ausgleichen der geometrischen Verzerrungen,
- Erzeugen eines mit Festbild bezeichneten Referenzbildes durch Interpolation einer Referenzpunktwolke, Festpunktwolke genannt,
- Erzeugen eines sogenannten Bewegungsbildes für jede weitere Punktwolke, die mit bewegter Punktwolke bezeichnet wird, wonach eine Optimierung eines mittleren quadratischen Fehlers erfolgt, der zwischen dem Bewegungsbild und dem Festbild errechnet wird.

**4.** Verfahren nach Anspruch 3, **dadurch gekennzeichnet, dass** der mittlere quadratische Fehler errechnet wird, indem nur die Pixel berücksichtigt werden, die den Punkten der beweglichen Punktwolken entsprechen.

**5.** Verfahren nach Anspruch 3 oder 4, **dadurch gekennzeichnet, dass** die Interpolation aus einem sogenannten Algorithmus zur iterativen Approximation mit B-Splines besteht.

**6.** Verfahren nach einem der Ansprüche 3 bis 5, **dadurch gekennzeichnet, dass** die Festpunktwolke einer Ruhestellung des Bildleiters entspricht.

**7.** Verfahren nach Anspruch 1 oder 2, **dadurch gekennzeichnet, dass** der Korrekturschritt darin besteht, die Punktwolken je nach vorbestimmten Verschiebungsentfernungen zu korrigieren, die mit einem Schritt zum Kalibrierung der Verlagerungen des Bildleiters erhalten werden.

**8.** Verfahren nach einem der vorangehenden Ansprüche, **dadurch gekennzeichnet, dass** zum Verschieben des Bildleiters bezüglich des optischen Kopfes bei jeder Erfassung zumindest eine Spannung an zumindest ein piezoelektrisches Band angelegt wird, das zumindest mit dem distalen Ende dieses Bildleiters fest verbunden ist.

**9.** Verfahren nach den Ansprüchen 7 und 8, **dadurch gekennzeichnet, dass** der Schritt zum Kalibrierung dadurch erfolgt, dass die nachfolgenden Schritte auf eine begrenzte Anzahl von Punktwolken angewendet werden, die durch Erfassung eines Referenz-Testbildes erhalten werden, das an die Stelle des Betrachtungsobjekts gesetzt wird,

- Ausgleichen der geometrischen Verzerrungen,
- Erzeugen eines mit Festbild bezeichneten Referenzbildes durch Interpolation einer Referenzpunktwolke, Festpunktwolke genannt,
- Erzeugen eines sogenannten Bewegungsbildes für jede weitere Punktwolke, die mit bewegter Punktwolke bezeichnet wird, wonach eine Optimierung eines mittleren quadratischen Fehlers erfolgt, der zwischen dem Bewegungsbild und dem Festbild errechnet wird,
- Ausarbeitung eines linearen Modells, das die zwischen Festbild und Bewegungsbild erhaltene Verschiebungsentfernung in Abhängigkeit von der Spannung beschreibt, die zum Durchführen dieser Verschiebung an das piezoelektrische Band angelegt wird.

**10.** Verfahren nach Anspruch 8 oder 9, **dadurch gekennzeichnet, dass** vier Bänder verwendet werden, die eine piezoelektrische Röhre bilden, welche zumindest das distale Ende des Bildleiters umgibt, und dass bei jeder Verlagerung des distalen Endes des Bildleiters ein Paar entgegengesetzter Spannungen an zwei jeweilige entgegengesetzte Bänder angelegt wird.

**11.** Verfahren nach einem der vorangehenden Ansprüche, **dadurch gekennzeichnet, dass** die räumliche Verschiebung durch eine im wesentlichen seitliche Translationsbewegung des distalen Endes des Bildleiters in zwei orthogonalen Richtungen erhalten wird.

**12.** Verfahren nach einem der vorangehenden Ansprüche, **dadurch gekennzeichnet, dass** der Schritt zum Erzeugen des endgültigen Bildes mittels eines sogenannten Algorithmus zur iterativen Approximation mit B-Splines erfolgt, bei dem die Überlagerung als eine Punktwolke unregelmäßiger Punkte betrachtet wird.

**13.** Verfahren nach einem der vorangehenden Ansprüche, **dadurch gekennzeichnet, dass** dem Schritt zum Erzeugen des endgültigen Bildes ein Schritt zur Dekonvolution des endgültigen Bildes folgt.

**14.** Vorrichtung zum Erhöhen der Auflösung von konfokalen Bildern, die durch einen Bildleiter erfasst werden, der aus einer Mehrzahl von Lichtleitfasern besteht, wobei das proximale Ende dieses Bildleiters mit einer Laserabtastvorrichtung verbunden ist, die dazu vorgesehen ist, in jede Lichtleitfaser des Bildleiters einen Laserstrahl zu senden und bei einer Erfassung jeden Rückstrahl aufzunehmen, wobei dem distalen Ende ein optischer Kopf zugeordnet ist, um den von dem Bildleiter ausgestrahlten Laserstrahl in ein Betrachtungsobjekt zu fokussieren, **dadurch gekennzeichnet, dass** der optische Kopf optische Mittel aufweist, die fest mit diesem optischen Kopf verbunden sind, und dass die Vorrichtung ferner eine piezoelektrische Röhre aufweist, die den Bildleiter umgibt und fest mit diesem Bildleiter zumindest am distalen Ende verbunden ist, so dass dieses distale Ende bezüglich des optischen Kopfes in Reaktion auf eine Verschiebungsanweisung räumlich verschoben wird.

**15.** Vorrichtung nach Anspruch 14, **dadurch gekennzeichnet, dass** die piezoelektrische Röhre aus zumindest vier unabhängigen Keramikbändern besteht, die jeweils ein Viertel der Röhre einnehmen.

**16.** Vorrichtung nach Anspruch 15, **dadurch gekennzeichnet, dass** die Innen- und die Außenseite eines jeden Bandes mit metallischem Material, wie etwa Silber, überzogen sind, so dass mit Anlegen von entgegengesetzten Spannungen an zwei jeweilige, entgegengesetzte Bänder das distale Ende von der Röhre verschoben wird, indem der transversale Piezoeffekt Anwendung findet.

**17.** Vorrichtung nach Anspruch 15 oder 16, **dadurch gekennzeichnet, dass** die Keramikbänder paarweise in zwei orthogonalen Richtungen betätigt werden.

**18.** System, bei dem das Verfahren nach einem der Ansprüche 1 bis 13 durchgeführt wird, um die Auflösung von konfokalen Bildern zu erhöhen, die durch einen Bildleiter erfasst werden, der aus einer Mehrzahl von Lichtleitfasern besteht, wobei das proximale Ende dieses Bildleiters mit einer Laserabtastvorrichtung verbunden ist, die dazu vorgesehen ist, in jede Lichtleitfaser des Bildleiters einen Laserstrahl zu senden und bei einer Erfassung jeden Rückstrahl aufzunehmen, wobei dem distalen Ende ein optischer Kopf zugeordnet ist, um den von dem Bildleiter ausgestrahlten Laserstrahl in ein Betrachtungsobjekt zu fokussieren, **dadurch gekennzeichnet, dass** bei einer gegebenen Stellung des optischen Kopfes dieses System aufweist:

- Mittel zum Durchführen einer Mehrzahl von Erfassungen durch den Bildleiter,
- Mittel zum räumlichen Verschieben des distalen Endes des Bildleiters bezüglich des optischen Kopfes bei jeder Erfassung,
- Mittel zum Verarbeiten der Daten jeder Erfassung zu einer Punktwolke, die durch die am Objekt durch jede Lichtleitfaser des Bildleiters gemessene Lichtleistung gewichtet wird,
- Mittel zur Korrektur jeder Punktwolke,
- Mittel zum Überlagern der so korrigierten Punktwolken, und

Mittel zum Erzeugen eines endgültigen Bildes ausgehend von dieser Überlagerung.

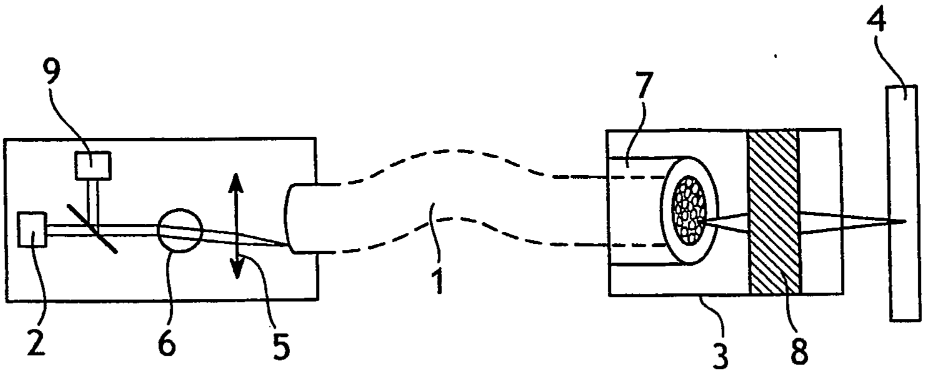


FIG.1

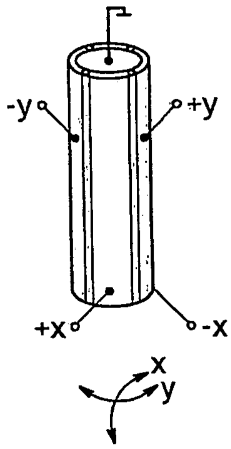


FIG.2

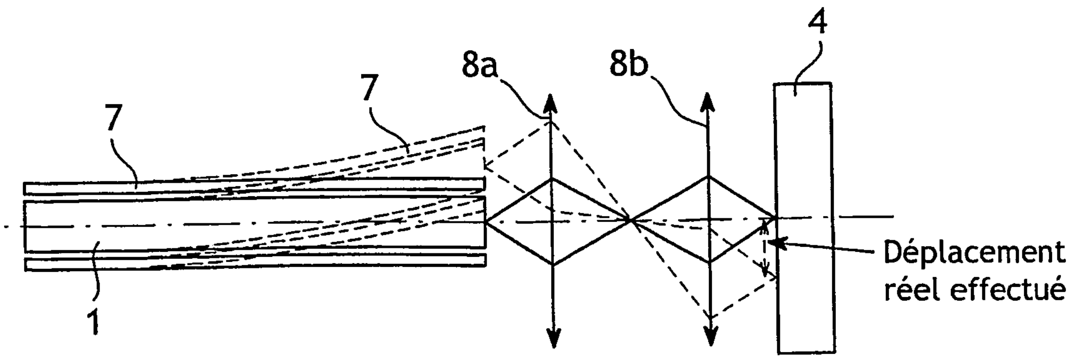


FIG.3

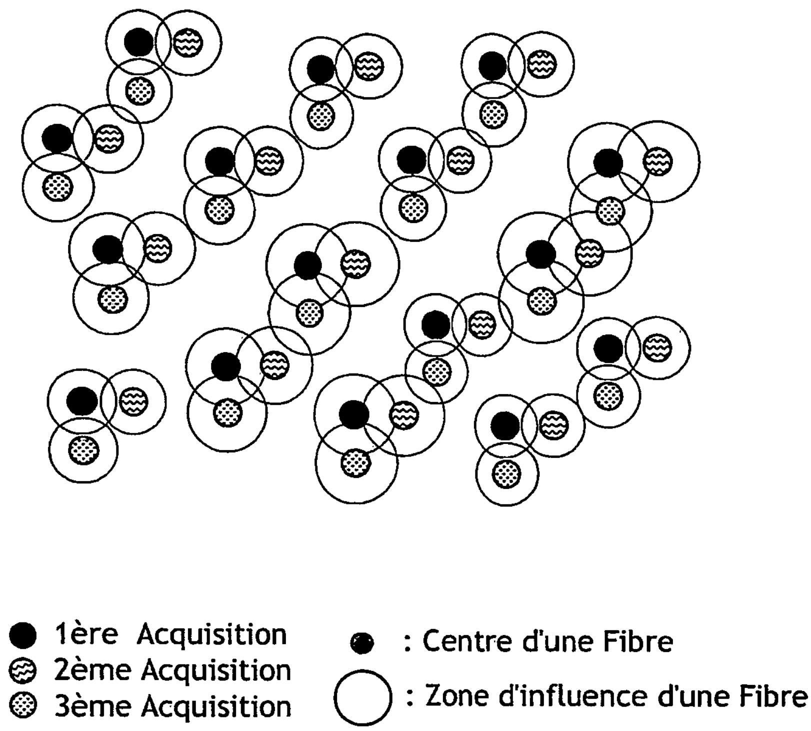
1ère Acquisition
2ème Acquisition
3ème Acquisition
: Centre d'une Fibre
: Zone d'influence d'une Fibre

FIG.4

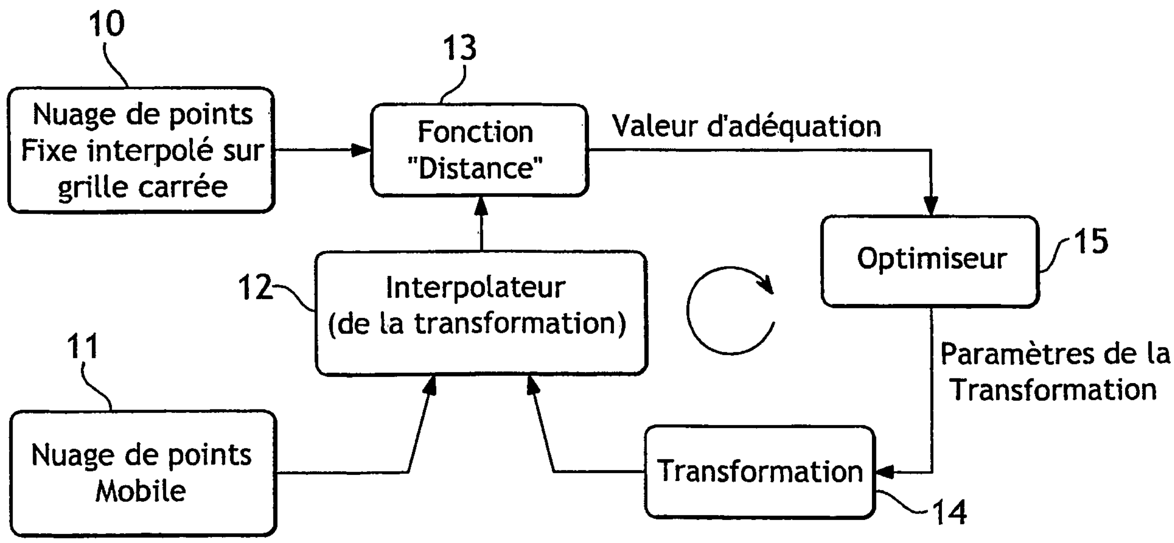
10
Nuage de points Fixe interpolé sur grille carrée
13
Fonction "Distance"
Valeur d'adéquation
Optimiseur
15
12
Interpolateur (de la transformation)
11
Paramètres de la Transformation
Nuage de points Mobile
Transformation
14

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6466618 B
- US 4618884 A

### Littérature non-brevet citée dans la description


- **H. SHEKARFOROUSH ; R. CHELLAPPA.** Data-driven multi-channel super-resolution with application to video sequences. *Journal of the Optical Society of America A,* Mars 1999, vol. 16 (3), 481-492
- **R KOMPROBST ; R. PEETERS ; T VIEVILLE ; G. MALANDAIN ; S. MIERISOVA ; S. SUNAERT ; 0. FAUGERASAND ; R VAN HECKE.** Superresolution in mri and its influence in statistical analysis. *Technical Report nO 4513,* Juillet 2002
- **S. LERTRATTANAPANICH AND N. K. BOSE.** High resolution image formation from low resolution frames using delaunay triangulation. *IEEE Transactions on Image Processing,* Décembre 2002, vol. 11 (12
- **A. PATTI ; M. SEZAN ; M. TEKALP.** Superresolution video reconstruction with arbitrary sampling lattices and nonzero aperture time. *IEEE Trans. on Image Processing,* Août 1997, 1064-1078
- **ANDREW J. PATTI ; YUCEL ALTUNBASAK.** Artifact reduction for set theoretic super resolution image reconstruction with edge adaptive constraints and higher-order interpolants. *IEEE Transactions on Image Processing,* Janvier 2001, vol. 10 (I), 179-186
- **SEUNGYONG LEE ; GEORGE WOLBERG ; SUNG YONG SHIN.** Scattered data interpolation with multilevel b-splines. *IEEE transactions on visualization and computer graphics,* Juillet 1997, vol. 3 (3